# EUROPÄISCHE PATENTSCHRIFT

(11) **EP 0 584 686 B1**
(45) Veröffentlichungstag und Bekanntmachung des Hinweises auf die Patenterteilung: **14.02.1996**
(21) Anmeldenummer: 93113081.9
(22) Anmeldetag: 16.08.1993
(51) Int. Cl.: F16L 55/10

(54) **Einfriervorrichtung für flüssigkeitsgefüllte Leitungen**
Freezing device for pipes filled with fluid
Dispositif pour la congélation de fluides dans des tuyaux

(30) Priorität: 22.08.1992 DE 4227874
(43) Veröffentlichungstag der Anmeldung: 02.03.1994
(73) Patentinhaber: ROTHENBERGER WERKZEUGE-MASCHINEN GMBH, D-65779 Kelkheim (DE)
(72) Erfinder: Velte, Karl-Heinz, D-61276 Weilrod (DE); Hellebrandt, Gerhard, D-65843 Sulzbach/Ts. (DE)
(74) Vertreter: Zapfe, Hans, Dipl.-Ing.

(56) Entgegenhaltungen:
- DE-A- 1 601 916
- DE-A- 2 740 975
- FR-A- 1 263 660
- FR-A- 2 477 669
- US-A- 5 118 139

## Beschreibung

Die Erfindung betrifft eine Einfriervorrichtung für flüssigkeitsgefüllte Leitungen mit einem Gehäuse, das aus halbschalenförmigen, im wesentlichen starren Gehäuseteilen besteht die an einer Trennfuge aneinander stoßen, und je eine Mantelwand und zwei Stirnwände aufweisen und unter Bildung eines Ringraumes zwischen den Stirnwänden, der Mantelwand und der Leitung durch Spannmittel gegeneinander verspannbar sind, wobei die Stirnwände elastomere Dichtungen aufweisen, deren Innenseiten gegen die Leitungsoberfläche gerichtet sind, und wobei der Ringraum eine Einlaßöffnung für ein flüssiges, verdampfbares Kältemittel aufweist und mindestens eine Auslaßöffnung zur Atmosphäre.

Derartige Einfriervorrichtungen dienen beispielsweise dazu, Warmwasserkreisläufe von Zentralheizungen vor und hinter einer Reparaturstelle abzusperren, damit nicht das ganze über der Reparaturstelle liegende Leitungssystem entleert werden muß.

Für diesen Zweck sind eine ganze Reihe von Einfriervorrichtungen bekannt geworden, die sich grob in zwei Gruppen unterteilen lassen. Bei der einen Gruppe ist das Gehäuse auch gegenüber der Leitungsoberfläche geschlossen, um beispielsweise ein Kältemittel im Kreislauf führen zu können. Hierbei ist jedoch der Wärmeübergang schlecht. Es ergeben sich dadurch lange Einfrierzeiten und der apparative Aufwand ist wegen des benötigten Kälteaggregats, gegebenenfalls mit Wärmetauscher, beträchtlich.

Bei der anderen Gruppe von Einfriervorrichtungen ist das Gehäuse in Richtung auf die Leitungsoberfläche offen, so daß das Kältemittel die Leitungsoberfläche unmittelbar berühren kann. Hierdurch werden zwar die Einfrierzeiten erheblich verkürzt, jedoch ist die Auswahl der Kältemittel begrenzt, insbesondere im Hinblick auf Umwelt-Schutzvorschriften.

Zu den bekannten Kältemitteln gehört beispielsweise Kühlsole, eine Salzlösung, die über einen Wärmetauscher im Kreislauf geführt werden muß. Auch verdampfbare Kältemittel wie beispielsweise Ammoniak und Fluor-Chlor-Kohlenwasserstoffe müssen oder können in einem geschlossenen Kreislauf mit Kompressoren und Kondensatoren geführt werden, wobei die Einfriervorrichtung als Verdampfer dient. Bei diesen Kreislaufsystemen, die teilweise unter Druck stehen, ist ein hoher Aufwand bei der Abdichtung der Einfriervorrichtung gegenüber der Leitung zu treiben, um ein Austreten der ätzenden Flüssigkeit (Sole) oder der auf andere Weise gesundheitsschädlichen Dämpfe an Atmosphäre zu verhindern. In allen Fällen ist der apparative Aufwand ganz beträchtlich.

Man hat daher eine zeitlang sogenannte offene Systeme benutzt, bei denen verdampfbare Kältemittel, d.h. Flüssiggase verwendet wurden, wie unter Druck stehende Kohlenwasserstoffe, darunter insbesondere Fluor-Chlor-Kohlenwasserstoffe, und auch flüssiges Kohlendioxid und flüssiger Stickstoff. Aufgrund bestehender Umweltschutzvorschriften scheidet die Verwendung von Fluor-Chlor-Fluor-Chlor-Kohlenwasserstoffen zunehmend aus, aber auch die reinen Kohlenwasserstoffe sind wegen der Bildung explosiver Gemische keineswegs problemlos. Bei diesen offenen Systemen hat man nämlich das verdampfte Kältemittel an Atmosphäre austreten lassen, um dem Installationsgewerbe möglichst einfache und leichte Geräte zur Verfügung stellen zu können.

Durch das französische Zusatzpatent 94 489 zum Hauptpatent 1 521 628 bzw. DE-A-1 601 916 ist eine Einfriervorrichtung der eingangs beschriebenen Gattung bekannt, die unter anderem für die Verwendung von flüssiger Kohlensäure und flüssigem Stickstoff vorgesehen ist. Die Kältemittel treten über eine Eintrittsöffnung in das Gehäuse ein und nach Aufnahme von Wärme aus der einzufrierenden Rohrleitung über eine Austrittsöffnung wieder an Atmosphäre aus, und zwar im wesentlichen in radialer Richtung durch eine Öffnung, die in der Mantelwand des Gehäuses angeordnet ist. Hierdurch geht ein nicht unbeträchtlicher Teil der Kühlwirkung des Gases verloren, da dieses Gas notwendigerweise mit einer Temperatur aus dem Gehäuse austritt, die erheblich unter dem Gefrierpunkt von Wasser liegt. Der Wirkungsgrad ist mithin deutlich verschlechtert. Die elastomeren Dichtungen sind dabei als halbe Hohlzylinder mit Rechteckquerschnitt ausgeführt und liegen dadurch mit Halbzylinderflächen fest auf der Leitung auf. Beim Auftreten eines höheren Innendrucks würden die Innenkanten der Dichtungen gegen die Rohrleitung gepreßt, so daß die Abdichtwirkung vergrößert würde. Um eine ausreichende Länge der Rohrleitung zu beaufschlagen, hat die Vorrichtung eine solche axiale Länge, daß vier Spannschrauben benötigt werden.

Durch die DE-OS 39 05 029 ist eine zur Leitung hin offene Einfriervorrichtung für die Verwendung von flüssigem Kohlendioxid bekannt, bei der das Gehäuse aus zwei schalenförmigen Teilen besteht, die sich über einen Umfangswinkel von jeweils mehr als 180 Grad erstrecken und mit ihren Enden ineinandergreifen. Um dabei eine teilweise Abdichtwirkung gegenüber der Atmosphäre zu erzielen und die Gehäuseteile auch ineinander einführen zu können, müssen die Gehäuseteile eine nicht unerhebliche Elastizität aufweisen, die nach dem Gebrauch durch Abkühlung auf extrem tiefe Temperaturen vorübergehend zumindest teilweise verloren geht, so daß der Werkstoff vorübergehend versprödet. Da bei dieser Lösung eine definierte Trennfuge zwischen den Gehäuseteilen nicht vorhanden ist, die als Anschlag für die Verspannung dienen könnte, kann die Bedienungsperson durch zu festes Anziehen der Spannschrauben den Werkstoff überbeanspruchen. Nicht zuletzt aber hängt die Abdichtwirkung von dieser Verspannung ab. Der Gasaustritt erfolgt überwiegend an den Eingriffsstellen der beiden Gehäuseteile ineinander, so daß auch hier ein nicht unbeträchtlicher Teil des noch tiefe Temperaturen aufweisenden verdampften Kältemittels für den eigentlichen Einfrierprozeß verloren geht.

Der Erfindung liegt daher die Aufgabe zugrunde, eine Einfriervorrichtung der eingangs beschriebenen Gattung dahingehend zu verbessern, daß das Kältemittel möglichst weitgehend für den Einfrierprozeß ausgenutzt wird, um dadurch den Wirkungsgrad des verwendeten Kältemittels zu verbessern. Bevorzugt soll dabei flüssiges Kohlendioxid zum Einsatz kommen.

Die Lösung der gestellten Aufgabe erfolgt bei der eingangs angegebenen Einfriervorrichtung erfindungsgemäß dadurch, daß die Dichtungen im Bereich ihrer auf die Leitung gerichteten Ränder auf ihrem Umfang schneidenförmige Dichtkanten aufweisen, die bei zunehmendem Druck im Ringraum von der Leitungsoberfläche abhebbar sind, derart, daß sich zwischen der Leitungsoberfläche und den Dichtkanten Spalte für den Austritt des Kältemittels mit Strömung über die Leitungsoberfläche bilden.

Durch die erfindungsgemäße Lösung wird die Abdichtwirkung der Dichtungen gegenüber der Leitung druckabhängig gestaltet, d.h. die Dichtungen schließen den Ringraum bis zu einem auslegungsbedingten Druck zuverlässig ab, um das Kältemittel möglichst lange bis zu seiner Verdampfung in dem Ringraum zu halten. Beim Überschreiten dieses Druckes durch Dampfbildung wird das Kältemittel gezielt abgesteuert, hierbei aber an der Leitungsoberfläche entlang geführt, so daß damit die Einfrierwirkung bzw. Einfrierzone in Richtung der Längsachse der Leitung verlängert wird.

In Verbindung mit der Maßnahme, die beiden Gehäuseteile im wesentlichen starr auszubilden und gegeneinander zu verspannen und nicht etwa ausschließlich gegen die Leitung, wird die Gefahr beseitigt, daß die mechanische Festigkeit der Gehäuseteile beim Verspannen überfordert wird. Außerdem wird dadurch vermieden, daß die Dichtungen einem unkontrollierbaren Anpreßdruck ausgesetzt werden, wodurch die Wirkung der Dichtkanten mindestens teilweise wieder verloren gehen könnte.

Die Dichtungen haben erfindungsgemäß die Wirkung eines voreingestellten Überdruckventils mit gleichzeitiger Richtwirkung auf den Kältemittelstrom über den Gesamtumfang der Leitungsoberfläche. Dadurch lassen sich sehr kurze Einfrierzeiten erreichen und die Kältewirkung des Kältemittels wird praktisch restlos ausgenutzt. Zusätzliche Auslaßöffnungen in den Gehäuseteilen sind nicht mehr vorhanden.

Bezüglich der axialen Ausdehnung der Einfrierzone ist es von Bedeutung, daß sich in einzufrierenden Rohrleitungen auch bei abgesperrtem Kreislauf des Leitungsinhalts sogenannte Mikrokonvektionen ausbilden, durch die Wasser aus wärmeren Zonen der Rohrleitung zur Einfrierstelle hin strömen kann. Diese Mikrokonvektionen haben die Tendenz, den sich als Verschluß in der Leitung ausbildenden Eispfropfen von den Enden her wieder aufzuschmelzen. Dieser Tendenz wird durch die axiale Ausdehnung der Einfrierzone sehr weitgehend entgegengewirkt, wodurch sich nicht nur die Einfrierzeiten kurz halten lassen, sondern auch ein unbeabsichtigtes Wiederaufschmelzen des Verschlußpfropfens verhindert wird.

Es ist dabei weiterhin von Vorteil, wenn die Dichtungen auf der dem Ringraum zugekehrten Seite Kegelflächen aufweisen, deren kleinster Durchmesser höchstens dem Leitungsdurchmesser entspricht. Die Kegelfläche ist hierbei diejenige Fläche, die zum Aufweiten der Dichtkanten unter dem Gasdruck radiale Kraftkomponenten erzeugt, die das Aufweiten bei Drucküberschreitung begünstigen. Außerdem sind die Kegelflächen besonders gut geeignet, das über einen Ringspalt austretende Kältemittel in besonders enger Nachbarschaft zur Leitungsoberfläche zu führen.

Durch die erfindungsgemäße Bauweise der Einfriervorrichtung lassen sich mit nur einer kleinen Anzahl unterschiedlich dimensionierter Gehäuse in Verbindung mit einer gleichfalls geringen Anzahl von Dichtungsteilen relativ große Durchmesserdifferenzen der verschiedenen Leitungen überbrücken, so daß die Bedienungsperson, in der Regel der Installateur, nur eine relativ geringe Anzahl von Gehäusen und auf das Gehäuse abgestimmten Dichtungen mit sich führen muß.

Weitere vorteilhafte Ausgestaltungen ergeben sich aus den übrigen Unteransprüchen. Die Vorteile werden in der Detailbeschreibung näher erläutert.

Ein Ausführungsbeispiel des Erfindungsgegenstandes wird nachstehend anhand der Figuren 1 bis 16 näher erläutert.

Es zeigen:
- Figur 1: eine teilweise geschnittene Seitenansicht einer vollständigen Einfriervorrichtung mit axialer Blickrichtung (bezogen auf die einzufrierende Leitung),
- Figur 2: eine Draufsicht von oben auf den Gegenstand nach Figur 1,
- Figur 3: eine Unteransicht des Gegenstandes nach Figur 1,
- Figur 4: eine Innenansicht eines Gehäuseteils ohne Dichtungen mit Blickrichtung senkrecht auf die Trennfuge,
- Figur 5: einen teilweisen Radialschnitt durch ein Gehäuseteil in einer Darstellung analog Figur 1,
- Figur 6: einen teilweisen Radialschnitt durch das andere Gehäuseteil in einer Darstellung analog Figur 1,
- Figur 7: einen Schnitt durch das Gehäuseteil gemäß Figur 5 entlang der Linie VII-VII,
- Figur 8: eine Seitenansicht des Gegenstandes nach Figur 5 in Richtung des Pfeils VIII,
- Figur 9: einen Schnitt durch den Gegenstand nach Figur 6 entlang der Linie IX-IX,
- Figur 10: eine Seitenansicht des Gegenstandes nach Figur 6 in Richtung des Pfeils X,
- Figur 11: eine vergrößerte Darstellung des Ausschnitts "Z" in Figur 7,
- Figur 12: eine axiale Seitenansicht einer Dichtung,
- Figur 13: eine radiale Draufsicht auf die Dichtung nach Figur 12,
- Figur 14: einen Schnitt durch die Dichtung nach den Figuren 12 und 13,
- Figur 15: eine axiale Draufsicht auf die Dichtung nach Figur 14 in Richtung des Pfeils XV,
- Figur 16: eine Vergrößerung des Details bei "Z" in Figur 14.

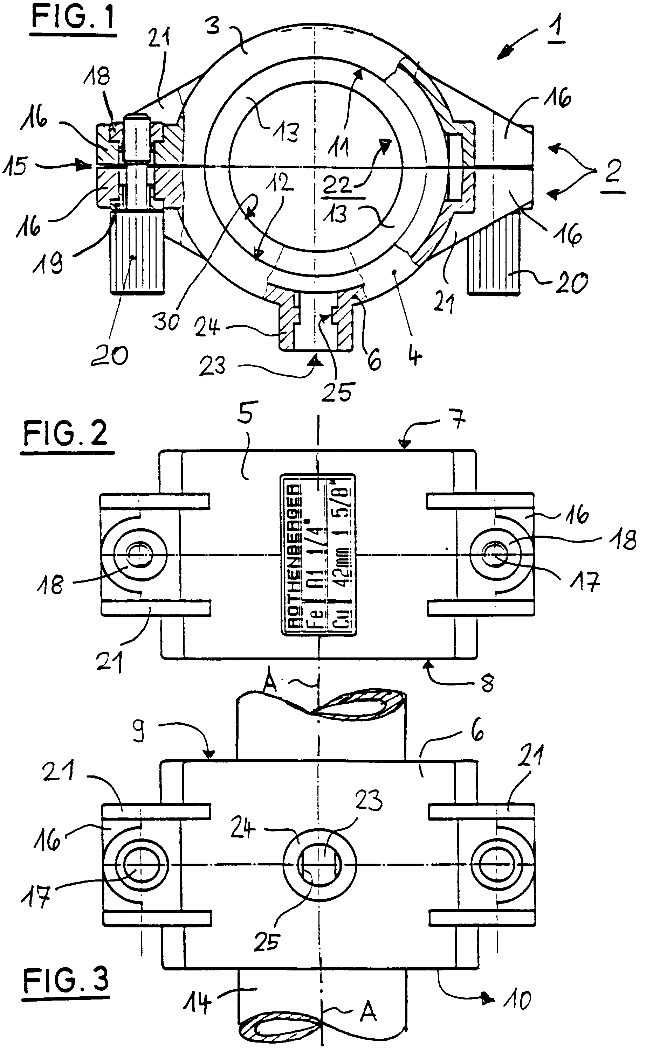

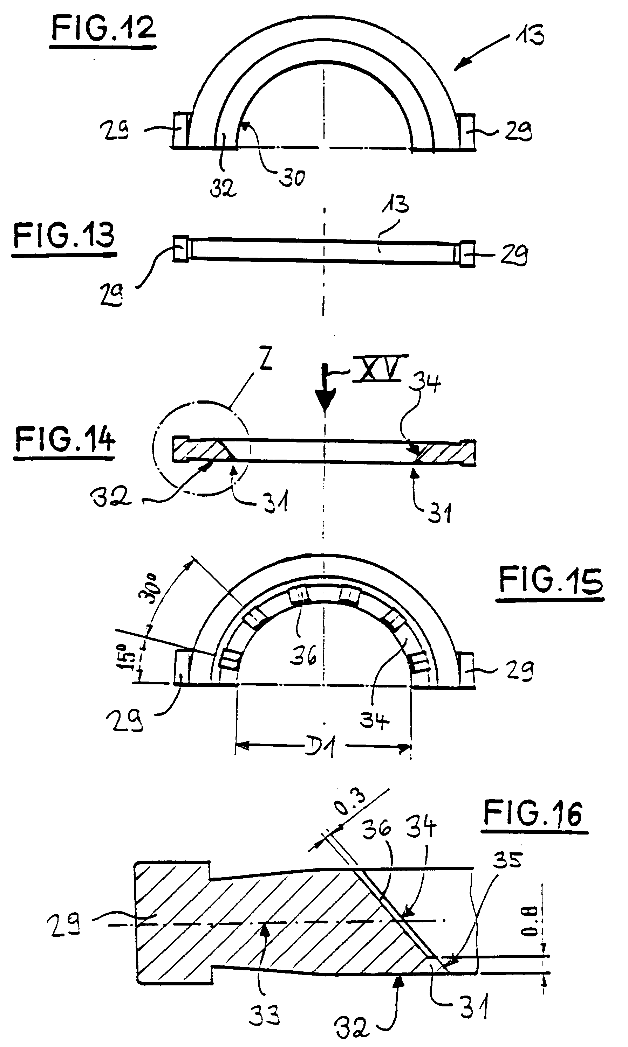

In den Figuren 1 bis 3 ist eine vollständige Einfriervorrichtung 1 dargestellt, die ein Gehäuse 2 besitzt, das aus zwei halbschalenförmigen, im wesentlichen starren Gehäuseteilen 3 und 4 besteht, die je eine im wesentlichen hohlzylindrische Mantelwand 5 bzw. 6 und zwei Stirnwände 7, 8 bzw. 9, 10 besitzen. Die Stirnwände besitzen halbkreisförmige Ausschnitte 11 bzw. 12, in die Dichtungen 13 eingesetzt sind, die weiter unten anhand der Figuren 12 bis 16 noch näher erläutert werden. Jeweils zwei sich zu einem Kreisring ergänzende Dichtungen 13 umschließen eine flüssigkeitsgefüllte Leitung 14, die in Figur 3 dargestellt ist und eine Achse A-A besitzt, die mit der Achse der Einfriervorrichtung zusammenfällt.

Die Gehäuseteile 3 und 4 stoßen an einer ebenen Trennfuge 15 aneinander, in der auch die Achse A-A liegt. Die beiden Gehäuseteile 3 und 4 sind beiderseits der Trennfuge 15 in spiegel symmetrischer Anordnung und radial zur Achse A-A durch flanschförmige Fortsätze 16 verlängert, in denen sich Bohrungen 17 befinden, die paarweise miteinander fluchten. In der jeweils oberen (bezogen auf die Darstellung in Figur 1) Bohrung 17 befindet sich jeweils eine metallische Gewindebuchse 18, und in der jeweils unteren Bohrung ein gleichfalls metallisches Widerlager 19 für jeweils eine Rändelschraube 20. Mittels der beiden in Figur 1 gezeigten Rändelschrauben 20 lassen sich die beiden Gehäuseteile 3 und 4 an der Trennfuge 15 gegeneinander verspannen, ohne daß hierbei die Mantelwände 5 und 6 und die Stirnwände 7 bis 10 merklich verformt würden. Die Gehäuseteile 3 und 4 bestehen aus einem Kunststoff, der bis zu tiefen Temperaturen von beispielsweise - 40 °C und mehr seine Festigkeit behält.

Die vier flanschförmigen Fortsätze 16 sind zusätzlich noch über Versteifungsrippen 21 mit der jeweiligen Mantelwand verbunden, wie dies maßstäblich in den Figuren 1 bis 3 gezeigt ist.

Zwischen der Oberfläche der Leitung 14, den Mantelwänden 5 und 6 und den Stirnwänden 7 bis 10 wird ein hohlzylindrischer Ringraum 22 gebildet, in den eine Einlaßöffnung 23 mündet. Diese Einlaßöffnung 23 ist einem kurzen Rohrstutzen 24 angeordnet, der in radialer Richtung und mittig mit der unteren Mantelwand 5 verbunden ist. Der Rohrstutzen 24 ist in seinem Innern mit einem ersten Kupplungselement 25 versehen, in das ein komplementäres, hier nicht dargestelltes zweites Kupplungselement formschlüssig einsetzbar ist, das mit einer Anschlußleitung für ein Kältemittel, beispielsweise für flüssige Kohlensäure, verbunden ist. Die beiden Kupplungselemente bilden dabei eine Bajonettverbindung.

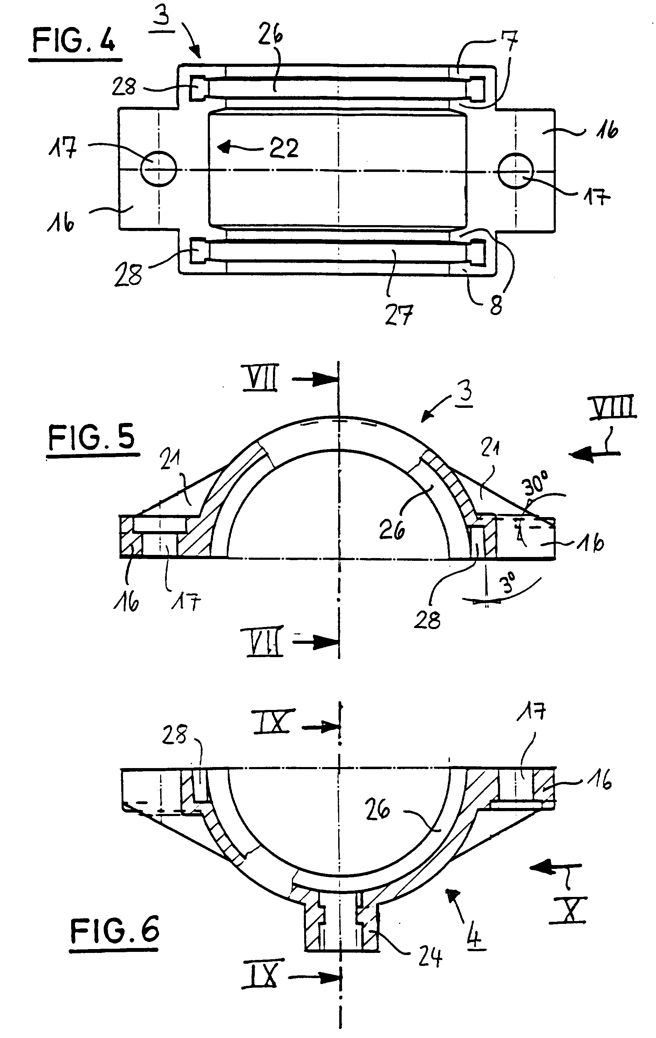

Figur 4 zeigt einen Einblick in die obere Hälfte des Ringraums 22. Die Stirnwände 7 und 8 des Gehäuseteils 3 sind an ihrem auf die Leitung 14 zu gerichteten Innenumfang mit halbringförmigen Nuten 26 und 27 versehen, die einen trapezförmigen Querschnitt besitzen, wie dies insbesondere aus Figur 11 hervorgeht. Diese Nuten dienen für die Aufnahme des Außenumfangs jeweils einer in den Figuren 12 bis 16 gezeigten Dichtungen 13.

Wie insbesondere aus einer Zusammenschau der Figuren 4 und 5 hervorgeht, besitzt das Gehäuseteil 3 im Bereich der Trennfuge bzw. an den Enden der Nut 26 Ausnehmungen 28, die in der Unteransicht gemäß Figur 4 einen etwa hammerförmigen Querschnitt aufweisen, in die entsprechend geformte Fortsätze 29 an den Dichtungen 13 einschiebbar sind (Figuren 12 bis 16).

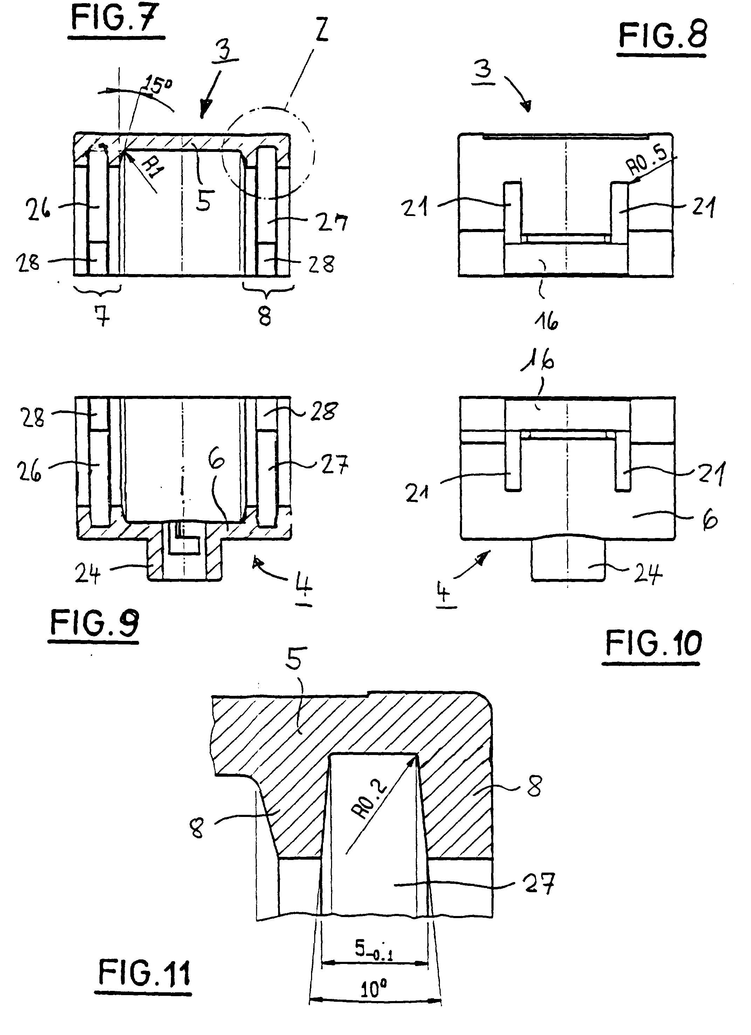

Der untere Gehäuseteil 4 mit dem Rohrstutzen 24 ist in spiegelsymmetrischer Anordnung in gleicher Weise ausgestaltet, wie sich aus den Figuren 6, 9 und 10 (mit jeweils gleichen Bezugszeichen) ergibt.

Die trapezförmige Ausbildung der Nuten 26 und 27 hat den Vorteil, daß die auf dem Außenumfang komplementär ausgebildeten Dichtungen 13 sich leicht in diese Nuten einsetzen bzw. einschieben lassen, und daß dennoch ein Schiefstellen der Dichtungen wirksam verhindert wird.

Anhand der Figuren 12 bis 16 ist dargestellt, daß die Dichtungen 13 im Bereich ihrer auf die Leitung 14 gerichteten Ränder 30 auf ihrem Umfang schneidenförmige Dichtkanten 31 aufweisen, die auf der Außenseite 32 angeordnet sind, d.h. außerhalb der radialen Ebene 33, in der beim Verformen einer hohlzylindrischen Dichtung die neutralen Fasern liegen. Wären die Dichtkanten innen angeordnet, so würden sie bei zunehmendem Druck stärker an die Rohrleitung angepreßt. Die erfindungsgemäßen Dichtungen weisen auf der dem Ringraum 22 zugekehrten Seite halbe Kegelstumpfflächen 34 auf, deren kleinster Durchmesser D1 höchstens dem Leitungsdurchmesser entspricht, so daß die Dichtkanten beim Verspannen der beiden Gehäuseteile gegeneinander die Oberfläche der Leitung 14 mit leichtem Anpreßdruck berühren.

Die Figuren 15 und 16 zeigen nun eine weitere Ausgestaltung der Dichtungen nach den Figuren 12 bis 14, und zwar sind die halben Kegelstumpfflächen 34 mit Ausnahme eines schneidenförmigen Bereichs 35 am kleinsten Durchmesser Dl durch Nuten 36 unterbrochen, deren Mittellinien mit Mantellinien eines Kegels zusammenfallen, dessen Achse mit der Rohrleitungsachse identisch ist. Hierdurch wird die Elastizität der aus einem elastomeren Werkstoff bestehenden Dichtlippen gezielt beeinflußt. Der elastomere Werkstoff hat dabei eine Shore-Härte, die durch Optimierungsversuche gefunden werden kann. Der Werkstoff ist dabei von einer solchen Beschaffenheit, daß eine ausreichende Eigenelastizität auch noch bei sehr tiefen Temperaturen im Bereich von etwa - 40 °C gegeben ist. Die Verhältnisse sind besonders deutlich anhand der Figur 16 dargestellt, die maßstäblich zu werten ist. Die halben Kegelstumpfflächen verlaufen dabei unter einem Winkel von etwa 45 Grad zur Leitungsachse A-A. Hierdurch sind die Dichtkanten bei steigendem Gasdruck im Ringraum 22 von der Leitungsoberfläche abhebbar, und zwar in der Weise, daß sich zwischen der Leitungsoberfläche und den Dichtkanten 31 Spalte für den Austritt des Kältemittels mit Strömungsrichtung über die Leitungsoberfläche bilden. Das Eintreten dieses Betriebszustandes kann beim Einfrieren der Rohrleitung leicht beobachtet werden: Nach einiger Zeit entsteht ein zischendes Geräusch, und die gesamte Oberfläche der Leitung 14 überzieht sich beiderseits der Einfriervorrichtung mit einem Belag aus Rauhreif, der die kühlende Einwirkung des aus den besagten Spalten austretenden Kältemittels deutlich vor Augen führt. Es ist gelungen, hierdurch die Einfrierzeiten deutlich geringer zu halten als in Fällen, in denen Dichtungen mit zylindrischer Auflagefläche auf der Leitung verwendet werden, bei denen die Entlüftung alsdann an einer anderen Stelle, aber außerhalb des Bereichs der Leitungsoberfläche erfolgt.

## Patentansprüche

1. Einfriervorrichtung (1) für flüssigkeitsgefüllte Leitungen (14) mit einem Gehäuse (2), das aus halbschalenförmigen, im wesentlichen starren Gehäuseteilen (3, 4) besteht, die an einer Trennfuge (15) aneinander stoßen und je eine Mantelwand (5, 6) und zwei Stirn- wände (7, 8; 9, 10) aufweisen und unter Bildung eines Ringraumes (22) zwischen den Stirnwänden, der Mantelwand und der Leitung (14) durch Spannmittel (18, 20) gegeneinander verspannbar sind, wobei die Stirnwände elastomere Dichtungen (13) aufweisen, deren Innenseiten gegen die Leitungsoberfläche gerichtet sind, und wobei der Ringraum (22) eine Einlaßöffnung (23) für ein flüssiges, verdampfbares Kältemittel aufweist und mindestens eine Auslaßöffnung zur Atmosphäre, **dadurch gekennzeichnet**, daß die Dichtungen (13) im Bereich ihrer auf die Leitung (14) gerichteten Ränder (30) auf ihrem Umfang schneidenförmige Dichtkanten (31) aufweisen, die bei zunehmendem Druck im Ringraum (22) von der Leitungsoberfläche abhebbar sind, derart, daß sich zwischen der Leitungsoberfläche und den Dichtkanten (31) Spalte für den Austritt des Kältemittels mit Strömung über die Leitungsoberfläche bilden.

2. Einfriervorrichtung nach Anspruch 1, **dadurch gekennzeichnet**, daß die Dichtungen (13) auf der dem Ringraum (22) zugekehrten Seite halbe Kegelstumpfflächen (34) aufweisen, deren kleinster Durchmesser D1 höchstens dem Leitungsdurchmesser entspricht.

3. Einfriervorrichtung nach Anspruch 2, **dadurch gekennzeichnet**, daß die Kegelstumpf flächen (34) mit Ausnahme eines schneidenförmigen Bereichs (35) am kleinsten Durchmesser D1 durch Nuten (36) unterbrochen sind.

4. Einfriervorrichtung nach Anspruch 1, **dadurch gekennzeichnet,** daß die Stirnwände (7, 8; 9, 10) der Gehäuseteile (3, 4) an ihrem auf die Leitung (14) zu gerichteten Innenumfang mit Nuten (26, 27) trapezförmigen Querschnitts für die Aufnahme des Außenumfangs der Dichtungen (13) versehen sind.

5. Einfriervorrichtung nach Anspruch 1, **dadurch gekennzeichnet,** daß die Dichtungen (13) an ihren im Bereich der Trennfuge (15) liegenden Enden mit hammerförmigen Fortsätzen (29) versehen sind, die in komplementären Ausnehmungen (28) in den Gehäuseteilen (3, 4) eingreifen.

6. Einfriervorrichtung nach Anspruch 1, **dadurch gekennzeichnet,** daß eines der beiden Gehäuseteile (4) ein erstes Kupplungselement (25) besitzt, in das ein komplementäres zweites Kupplungselement mit einer Anschlußleitung für das Kältemittel einsetzbar ist.

7. Einfriervorrichtung nach Anspruch 6, **dadurch gekennzeichnet,** daß die Kupplungselemente (25) eine Bajonettverbindung bilden.

8. Einfriervorrichtung nach Anspruch 1, **dadurch gekennzeichnet,** daß das Gehäuse (2) aus einem kältebeständigen Kunststoff besteht und daß das mit dem ersten Kupplungselement (25) versehene Gehäuseteil (4) auf beiden Seiten dieses Kupplungselements mit eingesetzten Gewindebuchsen (18) versehen ist, in die von der gegenüberliegenden Seite her durch den jeweils anderen Gehäuseteil (3) hindurch Spannschrauben (20) einschraubbar sind.

## Claims

1. A freezing device (1) for liquid-filled pipes (14), comprising a housing (2) which is composed of semi-cupshaped, essentially rigid housing elements (3, 4) which abut at a partitioning line (15), and a respective casing wall (5, 6) and two end walls (7, 8; 9, 10) and are clamped together by clamping elements (18, 20) whilst forming an annular space (22) between the end walls, the casing wall and the pipe (14), and that the end walls have elastomer seals (13) the insides of which are oriented towards the pipe surface, and that the annular space (22) comprises an inlet opening (23) for a liquid evaporating refrigerant and at least one outlet opening to the atmosphere, **characterized in that** the seals (13) have in the area of the edges (30), which are oriented towards the pipe (30), peripherally cutting-edgeshaped sealing edges (31) which can be lifted off the pipe surface when the pressure in the annular space (22) increases, so that gaps form between the pipe surface and the sealing edges (31) for a discharge of the refrigerant with a flow over the pipe surface.

2. A freezing device according to Claim 1, **characterized in that** the seals (13) have on the side facing towards the annular space (22) half truncated surfaces (34), the smallest diameter D1 of which corresponds at the most with the pipe diameter.

3. A freezing device according to Claim 2, **characterized in that** the truncated surfaces (34) are, with the exception of a cutting-edgeshaped area (35), broken up at the smallest diameter D1 by grooves (36).

4. A freezing device according to Claim 1, **characterized in that** the end walls (7, 8; 9, 10) of the housing elements (3, 4) are at their inner circumference which is oriented towards the pipe (14) provided with grooves (26, 27) of trapezoidal cross-section for receiving the outer circumference of the seals (13).

5. A freezing device according to Claim 1, **characterized in that** the seals (13) are at their ends located in the area of the partitioning line (15) provided with hammershaped extensions (29) which engage complementary cutouts (28) in the housing elements (3, 4).

6. A freezing device according to Claim 1, **characterized in that** one of the two housing elements (4) has a first coupling element (25) into which is insertable a complementary second coupling element with a connecting pipe for the refrigerant.

7. A freezing device according to Claim 6, **characterized in that** the coupling elements (25) establish a bayonet connection.

8. A freezing device according to Claim 1, **characterized in that** the housing (2) is made of a cold-resistant plastic material and that the housing element (4) which is provided with the first coupling element (25) has on both sides of said coupling element inserted threaded bushes (18) into which clamping bolts (20) are screwed from the opposite side through the respective other housing element (3).

## Revendications

1. Dispositif de congélation (1) de conduites (14) remplies de liquide, comportant un boîtier (2) qui est constitué par des parties de boîtier (3, 4) sensiblement rigides et en forme de demi-coques, qui se joignent au niveau d'un joint de séparation (15), qui présentent chacune une paroi enveloppe (5, 6) et deux parois frontales (7, 8 ; 9, 10), et qui peuvent être serrées l'une contre l'autre au moyen d'organes de serrage (18, 20) en formant une chambre annulaire (22) entre les parois frontales, la paroi enveloppe et la conduite (14); les parois frontales présentant des joints élastomères (13) dont les faces intérieures sont dirigées vers la surface de la conduite, et la chambre annulaire (22) présentant une ouverture d'entrée (23) pour un réfrigérant liquide vaporisable et au moins une ouverture de sortie vers l'atmosphère ; caractérisé en ce que les joints (13) présentent, dans la région de leurs bordures (30) dirigées vers la conduite (14), des arêtes d'étanchéité (31) ayant à leur périphérie une forme de tranchant, qui peuvent être soulevées de la surface de la conduite lorsque la pression dans la chambre annulaire (22) augmente, de telle sorte que se forment des fentes entre la surface de la conduite et les arêtes d'étanchéité (31) pour la sortie du réfrigérant avec écoulement par-dessus la surface de la conduite.

2. Dispositif de congélation selon la revendication 1, caractérisé en ce que les joints (13) présentent du côté orienté vers la chambre annulaire (22) des surfaces en forme de demi-troncs coniques (34) dont le plus petit diamètre D1 correspond au maximum au diamètre de la conduite.

3. Dispositif de congélation selon la revendication 2, caractérisé en ce que les surfaces de troncs coniques (34) sont interrompues au niveau du diamètre le plus petit D1 par des gorges (36), exception faite d'une région (35) en forme de tranchant.

4. Dispositif de congélation selon la revendication 1, caractérisé en ce que les parois frontales (7, 8 , 9, 10) des parties de boîtier (3, 4) sont pourvues, à leur périphérie intérieure dirigée vers la conduite (14), de gorges (26, 27) d'une section transversale en forme de trapèze pour la réception de la périphérie extérieure des joints (13).

5. Dispositif de congélation selon la revendication 1, caractérisé en ce que les joints (13) sont pourvus, à leurs extrémités situées dans la région du joint de séparation (15), de prolongements (29) en forme de marteau, qui s'engagent dans des évidements complémentaires (28) dans les parties de boîtier (3, 4).

6. Dispositif de congélation selon la revendication 1, caractérisé en ce que l'une des deux parties de boîtier (4) possède un premier élément d'accouplement (25) dans lequel peut être mis en place un second élément d'accouplement complémentaire comportant une conduite de raccordement pour le réfrigérant.

7. Dispositif de congélation selon la revendication 6, caractérisé en ce que les éléments d'accouplement (25) forment une liaison à baïonnette.

8. Dispositif de congélation selon la revendication 1, caractérisé en ce que le boîtier (2) est constitué en une matière plastique résistante au froid, et en ce que la parue de boîtier (4) pourvue du premier élément d'accouplement (25) est pourvue, des deux côtés de cet élément d'accouplement, de douilles taraudées (18) mises en place, dans lesquelles peuvent me vissées des vis de serrage (20) depuis le côté opposé, à travers l'autre partie de boîtier respective (3).
